# EUROPÄISCHE PATENTSCHRIFT

(11) **EP 1 451 045 B1**
(45) Veröffentlichungstag und Bekanntmachung des Hinweises auf die Patenterteilung: **28.12.2005**
(21) Anmeldenummer: 02785338.1
(22) Anmeldetag: 31.10.2002
(51) Int. Cl.: B60R 22/46, B60R 22/34

(54) **VERFAHREN ZUR ANSTEUERUNG EINES REVERSIBLEN GURTSTRAFFERS**
METHOD FOR ACTUATING A REVERSIBLE BELT PRETENSIONER
PROCEDE D'ACTIONNEMENT D'UN PRETENDEUR DE CEINTURE REVERSIBLE

(30) Priorität: 06.12.2001 DE 10160071
(43) Veröffentlichungstag der Anmeldung: 01.09.2004
(73) Patentinhaber: DaimlerChrysler AG, 70567 Stuttgart (DE)
(72) Erfinder: BULLINGER, Wilfried, 70825 Korntal-Münchingen (DE); EBERLE, Walter, 73269 Hochdorf (DE); WOLDRICH, Markus, 71254 Ditzingen (DE)
(74) Vertreter: Nili, Karim
(86) Internationale Anmeldenummer: PCT/EP2002/012142
(87) Internationale Veröffentlichungsnummer: WO 2003/047922

(56) Entgegenhaltungen:
- WO-A-01/85495
- DE-A- 10 061 040
- US-A- 5 788 281
- US-A1- 2001 037 907

## Beschreibung

Die Erfindung betrifft ein Verfahren zur Ansteuerung eines reversiblen Gurtstraffers gemäß dem Oberbegriff des Patentanspruchs 1.

Sicherheitsgurte, welche heute üblicherweise in Kraftfahrzeugen verbaut werden, verfügen über einen Mechanismus zum automatischen Aufwickeln des losen Gurtbandes auf eine Gurtaufwickelrolle, welche auf einer Gurtspule angeordnet ist. Durch das automatische Aufwickeln wird erreicht, dass der angelegte Gurt locker am Körper eines Insassen anliegt und bei Nichtgebrauch des Sicherheitsgurts auf der Gurtaufwickelrolle aufgerollt ist. Das Abwickeln des Gurts von der Gurtaufwickelrolle geschieht gegen ein Drehmoment, welches von einer Rückzugsfeder erzeugt wird, und ist auch bei angelegtem Gurt möglich, um dem Insassen eine weitgehend freie Bewegung zu ermöglichen.

Weiterhin ist üblicherweise eine Blockiervorrichtung vorhanden, welche als Gurtauszugssperre wirkt. Diese Blockiervorrichtung wird durch eine Ansteuervorrichtung mit gurtband- und fahrzeugsensitivem Sensor, bei schnellem Abwickeln des Gurts von der Gurtaufwickelrolle, ab einer vorgegebenen Beschleunigung der Gurtaufwickelrolle in Abwickelrichtung oder ab einer vorgegebenen Beschleunigung des Fahrzeugs ausgelöst. Die Gurtaufwickelrolle wird dadurch in der zu diesem Zeitpunkt vorliegenden Position festgelegt, so dass ein Abwickeln des Gurtbandes verhindert wird. Eine übliche Blockiervorrichtung besteht beispielsweise aus einer Blockierverzahnung der Gurtspule und einer Blockierklinke, welche schwenkbar gelagert ist und durch die Ansteuervorrichtung in die Blockierverzahnung der Gurtspule einschwenkbar ist. Die Verzahnungen an der Gurtspule und der Blockierklinke sind selbstsperrend gestaltet, was dazu führt, dass der Gurtauszug blockiert wird, solange eine Zugbelastung am Gurt anliegt. Wird der Gurt von dieser Zugbelastung entlastet, so kann der Blockiermechanismus öffnen, das heißt er kann in seinen nicht wirksamen Zustand zurückgeführt werden. Dieses Zurückführen erfolgt magnetisch, elektromotorisch oder üblicherweise mechanisch, beispielsweise durch eine Rückholfeder an der schwenkbar gelagerten Sperrklinke.

Bei vielen Sicherheitsgurten ist zudem ein Gurtstraffer vorhanden, welcher die Schutzwirkung des Sicherheitsgurts erhöht. Der Gurtstraffer weist einen Antrieb auf, welcher angesteuert werden kann, um eine mechanische Vorrichtung anzutreiben, welche das lose Gurtband verkürzt und/oder einen Insassen nach hinten zieht. Bei einem pyrotechnischen Energiespeicher beispielsweise wird eine chemische Substanz mittels eines Zünders zu einer exothermen Reaktion veranlasst. Bei dieser Reaktion wird ein Gasstrom erzeugt, welcher die mechanische Vorrichtung antreibt. Die angetriebene Vorrichtung ist mit der Gurtspule mechanisch verbunden oder mit dieser mechanisch verbindbar, beispielsweise über eine Kupplung. Über diese Verbindung übt die mechanische Vorrichtung auf die Gurtspule ein Drehmoment aus. Aufgrund dieses Drehmoments dreht sich die Gurtspule mit der darauf angeordneten Gurtaufwickelrolle und strafft das abgewickelte Gurtband.

Außer den heutzutage in Kraftfahrzeugen eingesetzten, zumeist pyrotechnischen Gurtstraffern sind auch reversible Gurtstraffer in Fahrzeugen einsetzbar, welche mehrmals, auch schnell hintereinander, ausgelöst werden können. Diese reversiblen Gurtstraffer können unterschiedliche Antriebe aufweisen, beispielsweise kann ein solcher Gurtstraffer durch einen Elektromotor angetrieben werden, welcher dauerhaft oder über eine Kupplung steuerbar auf die Gurtspule wirkt. Andere reversible Gurtstraffer werden mit Druckluft aus einem Druckspeicher, oder durch eine gespannte Feder angetrieben, wobei der Druckspeicher während des Fahrbetriebs wieder befüllbar und die Feder während des Fahrbetriebs wieder spannbar ist.

Auf diese Weise angetriebene reversible Gurtstraffer ermöglichen eine Straffung des Sicherheitsgurts mit vorgebbarer Stärke, vorgebbarer Geschwindigkeit und vorgebbarer Zeitdauer. Durch die mehrfache Auslösbarkeit des reversiblen Gurtstraffers wird ein vorbeugendes Auslösen desselben ermöglicht. Ein vorbeugendes Auslösen bedeutet, dass der Gurtstraffer in sicherheitskritischen Fahrsituationen ausgelöst wird, welche beispielsweise von Fahrdynamiksensoren oder Fahrzeugumgebungssensoren erkannt werden, oder auf welche durch die Auswertung der Bremspedalbetätigung, des Lenkwinkels oder einer Fahrerbeobachtung geschlossen wird. Über ein vorbeugendes Auslösen hinaus kann ein reversibler Gurtstraffer auch zur haptischen Warnung des Fahrers in sicherheitskritischen Situationen eingesetzt werden. Bei einer vorbeugenden Auslösung des Gurtstraffers, welche vor dem Erfassen einer Kollision stattfinden kann oder bei einer Auslösung des Gurtstraffers zu Warnzwecken ist es wünschenswert, dass der Gurt nach der erfolgten Straffung, nach Beendigung der Gefahrensituation und bei sichergestelltem Normalfahrbetrieb wieder lose an den Insassen anliegt. Ein sichergestellter Normalfahrbetrieb liegt vor, wenn die Bewertung der Situation durch ein Steuergerät oder einen Gefahrenrechner nicht ergibt, dass eine sicherheitskritische Situation vorliegt, beziehungsweise wenn die für die Auslösung des Gurtstraffers notwendige Bedingung nicht mehr erfüllt ist. Eine solche Bedingung kann das Vorhandensein oder das Fehlen eines bestimmten Signals auf einem Datenbus oder einer Datenleitung sein.

Nach einer reversiblen Straffung des Sicherheitsgurts mittels eines reversiblen Gurtstraffers kann der Fall eintreten, dass aufgrund eines gurtbandsensitiven Sensors oder eines fahrzeugsensitiven Sensors, welche die Blockiervorrichtung elektrisch oder mechanisch ansteuern, die Gurtauszugssperre wirksam wurde. Beispiele für gurtbandsensitive Sensoren sind ein mechanischer Fliehkraftsensor im Gurtaufrollmechanismus, ein elektromechanischer Fliehkraftsensor oder ein elektronischer Gurtauszugssensor, welcher die Auszugsgeschwindigkeit des Gurtbandes oder dessen Beschleunigung erfasst. Ein gurtbandsensitiver Sensor kann insbesondere dann ansprechen, wenn nach einer Gurtstraffung ein Freigeben des gestrafften Gurts erfolgt, welcher unter einer Zugbelastung steht. Diese Zugbelastung des gestrafften Gurts ist insbesondere abhängig von der Stärke des zuvor erfolgten Straffvorgangs und von der Sitzposition des Insassen vor dem Straffvorgang. Durch die Zugbelastung wird der Gurt nach einem Straffvorgang wieder von der Gurtaufwickelrolle abgewickelt, nachdem das vom Gurtstrafferantrieb auf die Gurtspule ausgeübte Drehmoment abnimmt. Erfolgt das Abwickeln des Gurtbandes zu schnell, so spricht der gurtbandsensitive Sensor an und die Blockiervorrichtung wird, zumeist mechanisch, angesteuert, so dass sie schließt. Das heißt die Gurtauszugssperre wird wirksam. Die Gurtauszugssperre kann auch bereits wirksam werden, wenn der gurtbandsensitive Sensor aufgrund des Aufwickelvorgangs während der Gurtstraffung, oder der fahrzeugsensitive Sensor aufgrund der Fahrzeugbewegung anspricht. Ist die Gurtauszugssperre wirksam, so ist es nicht mehr möglich das gestraffte Gurtband abzuwickeln und die Bewegungsfreiheit der Insassen ist stark eingeschränkt. Das Gurtband soll deshalb wieder freigegeben werden, falls die Ursache für die Auslösung des Gurtstraffers nicht mehr vorhanden ist und/oder falls ein Normalfahrbetrieb sichergestellt ist. Um das Gurtband wieder freizugeben, ist bei den heute in Kraftfahrzeugen üblichen Blockiervorrichtungen die Sperrklinke von der Blockierverzahnung zu lösen. Die Freigabe des Gurtbands ist nur dann möglich, wenn der fahrzeugsensitive und der gurtbandsensitive Sensor die Blockiervorrichtung nicht zum Schließen derselben ansteuern.

Aus der DE 20013541 U1 ist eine Sicherheitsgurt-Spanneinrichtung mit einer Gurtaufwickelspule und einer Verriegelungseinrichtung bekannt, mit der eine Rotation der Spule in Abwickelrichtung des Gurtes verhindert werden kann. Es ist ein Gurtspannungs-Steuermechanismus mit einem Motor vorgesehen, welcher dazu dient, ein Drehmoment zu erzeugen, welches auf die Spule übertragen wird. Bei Vorliegen eines Notzustandes des Kraftfahrzeugs wird der Motor in Aufwickelrichtung des Gurtes über eine erste vorgegebenen Zeitspanne angetrieben, um den Fahrgast mit dem gestrafftem Gurt zurück zu halten. Nach Beendigung des Betriebes des Motors und wenn vorgegebenen Bedingungen, welche auf eine Beendigung des Notzustandes hinweisen, erfüllt sind, wird der Motor erneut in Aufwickelrichtung des Gurtes in Betrieb gesetzt, und zwar über eine zweite vorgegebene Zeitspanne T2. Damit soll eine bei Auftreten des Notzustandes eingeleitete Verriegelung wieder gelöst und erreicht werden, dass der Fahrgast leicht freigegeben und zuverlässig aus dem Zustand, in welchem er sicher gehalten wird, befreit wird, was dadurch geschieht, dass der Motor in Aufwickelrichtung des Gurtes betrieben wird. Zur Ermittlung eines Notzustandes, werden die Fahrzeuggeschwindigkeit, die Bremsbetätigungsgeschwindigkeit und die Fahrzeugbeschleunigung mit Schwellwerten verglichen. Die Beendigung des Notzustandes wird erkannt, wenn die Fahrzeuggeschwindigkeit oder Beschleunigung eine Schwelle unterschreiten oder das Fahrzeug anhält.

Als nachteilig wird seitens der Anmelderin angesehen, dass das in der DE 200 13 541 U1 beschriebene Verfahren nicht zuverlässig dazu führt, dass nach Beendigung des Notzustandes die Verriegelung gelöst und das Gurtband frei gegeben wird. Die durch den Betrieb des Motors in Aufwickelrichtung bewirkte Drehung der Gurtspule hängt nämlich nicht nur von der Zeitspanne der Bestromung sondern auch von der eingesetzten Motorstromstärke und der durch den Insassen bewirkten Gegenkraft auf den Gurt ab. Wenn nach Ablauf der vorgegebenen Zeitspanne T2 die bewirkte Drehung der Gurtspule nicht zu einem ausreichendem Drehwinkel geführt hat, welcher die Hinterschneidung einer Blockierverzahlung überwindet, kann der Blockiermechanismus nicht gelöst werden. Wenn nach Ablauf der Zeitspanne T2 die Zugbelastung des Gurtbandes auf den Blockiermechanismus weiterhin anhält, kann ebenso wenig die Blockierung gelöst werden, weil der gurtbandsensitive Sensor sofort anspricht. Wird die Zeitspanne T2 andererseits sehr lang bemessen, so hat dies den Nachteil, dass der bereits gestraffte Gurt mehr als unbedingt nötig eingezogen wird, um die Lösung der Blockierung zu erreichen, was eine unnötige Komfortbeeinträchtigung darstellt.

Aufgabe der Erfindung ist den Komfort bei der Anwendung eines reversiblen Gurtstraffers zu verbessern. Diese Aufgabe wird erfindungsgemäß durch die Merkmale des Anspruchs 1 gelöst.

Bei dem erfindungsgemäßen Verfahren zur Ansteuerung eines Gurtstraffers wird nach einem aufgrund einer Gefahrensituation zum Schutz eines Insassen erfolgten Gurtstraffvorgangs der Gurtstraffer zum Öffnen der Blockiervorrichtung in einem Öffnungsmodus angesteuert. Es wird von einem Gurtstraffersteuergerät mindestens eine für die Gurtkraft indikative Größe erfasst, und zur Ansteuerung im Öffnungsmodus in der Weise herangezogen, dass der Öffnungsmodus erst dann eingeleitet wird, wenn eine für die Gurtkraft indikative Größe auf eine vorgebbare Abnahme der Gurtkraft hindeutet. Die Ansteuerung des Gurtstraffers erfolgt derart, dass sich die Gurtspule zunächst in einer Aufwickelphase um einen bestimmten Drehwinkel in Aufwickelrichtung dreht, da das Öffnen der Blockiervorrichtung nur dann erfolgen kann, wenn das Gurtband keine Kraft mehr auf den Blockiermechanismus ausübt und beispielsweise bei einer Blockiervorrichtung mit hinterschnittener Blockierverzahnung eine Drehung der Gurtspule mindestens um die Hinterschneidung der Zähne stattfindet, wobei das Gurtband geringfügig aufgewickelt wird.

Der Öffnungsmodus kann in einer alternativen Ausführungform des erfindungsgemäßen Verfahrens auch dann eingeleitet werden, wenn die indikative Größe für die Gurtkraft darauf hindeutet, dass die Gurtkraft einen vorgebbaren Schwellwert unterschreitet.

Unter der Gurtkraft soll diejenige Kraft verstanden werden, welche vom Gurtband auf einen Insassen ausgeübt wird. Die Gurtkraft ist also eine von dem Insassen unmittelbar wahrnehmbare Größe, welche senkrecht zum Gurtbandverlauf wirkt. Steigt die Gurtkraft so steigt auch die Zugkraft im Gurtband und umgekehrt. Außer dem Zeitpunkt der Einleitung des Öffnungsmodus kann auch die Stärke und die Geschwindigkeit des Aufwickelvorgangs zu Beginn des Öffnungsmodus von der Gurtkraft beziehungsweise einer dafür indikativen Größe abhängen. Vorteil des erfindungsgemäßen Verfahrens, bei dem zur Ermittlung des Zeitpunkts des Beginns der Ansteuerung des Gurtstrafferantriebs in den Öffnungsmodus die auftretende Gurtkraft und/oder der Gurtkraftverlauf beziehungsweise dafür indikative Größen herangezogen werden, ist es, dass eine Komfortbeeinträchtigung des Fahrers oder eines anderen Insassen vermieden oder zumindest verringert wird. Eine solche Komfortbeeinträchtigung würde durch einen spürbaren Gurtkraftanstieg während des Lösevorgangs der Blockiervorrichtung im Anschluss an eine bereits überstandene Gefahrensituation verursacht werden.

In einer Ausgestaltung des Verfahrens wird der Öffnungsmodus erst dann eingeleitet, wenn mittels einer erfassten Größe darauf geschlossen wird, dass eine vorgebbare Bedingung vorliegt, welche indikativ für eine Beendigung der Gefahrensituation ist.

Um den Insassen möglichst wenig zu beeinträchtigen wird mittels der Ansteuerung des Gurtstraffers der Gurtstrafferantriebsmotor vorzugsweise so geregelt, dass die indikative Größe für die Gurtkraft, welche durch einen Aufwickelvorgang zunimmt, solange in einem vorgebbaren Wertebereich verbleibt, bis die Gurtspule soweit gedreht ist, dass sich die Blockiervorrichtung öffnen kann. Hierdurch erfolgt das Aufwickeln des Gurtbandes bei der Drehung der Gurtspule in Aufwickelrichtung für den Insassen nahezu unbemerkbar.

Beispielsweise bei einer Rückverlagerung des Insassen in Richtung der Rückenlehne des Sitzes, welche im Anschluss an eine starke Bremsung erfolgt und durch welche die auf den Insassen wirkenden Gurtkräfte verringert werden, wird der Gurtstraffer derart angesteuert, dass während der Rückverlagerung eines Insassen das Gurtband solange auf die Gurtrolle aufgewickelt wird, bis die Gurtspule eine Position erreicht hat, in der sich die Blockiervorrichtung öffnen kann. Hierbei wird der Motorstrom des Gurtstrafferantriebs so geregelt, dass die Gurtkraft, mit welcher das Gurtband auf den Insassen wirkt möglichst konstant bleibt bis die Gurtspule eine Endposition erreicht, in welcher zumindest aufgrund der Verzahnung der Blockiervorrichtung das Öffnen derselben möglich ist. Das Öffnen der Blockiervorrichtung kann erst dann erfolgen, wenn das Gurtband keine Kraft mehr auf den Blockiermechanismus ausübt und beispielsweise bei einer Blockiervorrichtung mit hinterschnittener Blockierverzahnung eine Drehung der Gurtspule mindestens um die Hinterschneidung der Zähne stattfindet.

Alternativ zu einem möglichst konstanten Kraftverlauf während der Aufwickelphase im Öffnungsmodus wird der Motorstrom so geregelt, dass sich die Kraft, welche der Gurt auf den Insassen ausübt langsam verringert bis die Endposition der Gurtspule erreicht ist. In beiden vorgenannten alternativen Beispielen wird die Gurtkraft im Öffnungsmodus vorzugsweise nicht mehr wesentlich vergrößert, um dem Insassen ein komfortables Gefühl zu vermitteln.

Bevorzugt wird die Gurtspule mittels des Gurtstrafferantriebs nur gerade soweit gedreht, bis zum ersten mal eine Position erreicht ist, in welcher die Blockiervorrichtung öffnen kann. Diese Position wird ermittelt indem der Drehwinkel der Gurtspule beispielsweise mittels eines Drehwinkelgebers erfasst oder durch Auswerten des Motorstroms ermittelt wird. Durch die möglichst geringe Drehung der Gurtspule wird der Kraftanstieg im Gurt, welcher durch die Ansteuerung zum Öffnen der Blockiervorrichtung bewirkt wird, möglichst klein gehalten.

In einer Ausgestaltung des Verfahrens wird in einem Fahrzeug mit einem Bremsassistenzsystem das Vorhandensein eines Bremsassistenzsignals erfasst, welches von einem Bremsassistenzsystem ausgegeben wird und einen Bremseingriff mit vorgegebener starker Bremswirkung bewirkt. Der Wegfall dieses Bremsassistenzsignals ist einerseits indikativ für die Beendigung der Gefahrensituation und leitet andererseits als die für die Gurtkraft indikative Größe den Öffnungsmodus ein. Vorteil dieser Ausgestaltung ist es, dass nur das Vorhandensein eines Signals erfasst werden muss, welches mit der Gurtkraft korreliert ist, und bereits hierdurch in einfacher Weise der Öffnungsmodus so eingeleitet wird, dass in häufigen Fällen eine Komfortbeeinträchtigung vermieden oder reduziert wird.

Ist das Fahrzeug mit einem Bremsassistenzsystem ausgestattet, welches nicht nur einen binäres Bremsassistenzsignal (ein/aus), sondern mehrere Abstufungen oder ein Proportionalsignal erzeugt, so kann auch die Stärke des dem Bremsassistenzsignals zugehörigen Bremseingriffs, bzw. der dem Bremsassistenzsignal zugehörigen Maßnahme als indikative Größe für die Gurtkraft herangezogen werden.

Aus dem Bremsassistenzsignal, beziehungsweise aus dessen Wegfall kann auf den Verlauf der Beschleunigung eines freien Körpers im Fahrzeuginnenraum und auf den Verlauf der Beschleunigung eines Insassen im Fahrzeuginnenraum geschlossen werden. Mittels der Beschleunigung eines Insassen kann wiederum auf die Gurtkraft geschlossen werden. Dies kann noch verbessert werden, wenn zusätzlich weitere Daten, wie beispielsweise die Fahrzeuggeschwindigkeit oder der Reibwert zwischen Reifen und Strasse herangezogen werden, wobei diese Daten auch alternativ zu einem Bremsassistenzsignal als indikative Größen für die Gurtkraft oder zur Ermittlung einer solchen Größe herangezogen werden können. Hieraus ergeben sich weitere vorteilhafte Ausgestaltungen des erfindungsgemäßen Verfahrens.

Beispielsweise wird bei einem Bremsvorgang das Erreichen oder Unterschreiten eines ersten Geschwindigkeitsschwellwerts durch die Fahrzeuggeschwindigkeit als indikativ für die Beendigung der Gefahrensituation herangezogen, wobei das Erreichen oder Unterschreiten eines zweiten Geschwindigkeitsschwellwerts durch die Fahrgeschwindigkeit als indikative Größe für die Gurtkraft auf das Abnehmen der Gurtkraft hindeutet. Der erste und auch der zweite Fahrgeschwindigkeitsschwellwert können die gleichen, insbesondere beide gleich Null sein.

In einer Weiterbildung des Verfahrens ist die indikative Größe für die Gurtkraft eine Gurtkrafterwartungsgröße, welche mittels eines Gurtkraftmodells ermittelt wird. Es wird dann auf ein Abnehmen der Gurtkraft geschlossen, wenn die Gurtkrafterwartungsgröße um mindestens einen vorgebbaren Abnahmeschwellwert abnimmt. Die Gurtkrafterwartungsgröße ist ein Maß für die momentan zu erwartende Gurtkraft, sie kann jedoch von der tatsächlichen Gurtkraft abweichen, da nur ein Teil der für die tatsächliche Gurtkraft ursächlichen Parameter zur Ermittlung der Gurtkrafterwartungsgröße herangezogen werden. Wichtiger als die quantitative Ermittlung der Gurtkraft ist es hierbei, den qualitativen Verlauf der Gurtkraft durch die mittels des Gurtkraftmodells ermittelte Gurtkrafterwartungsgröße abzubilden. Zur Ermittlung der Gurtkrafterwartungsgröße kann beispielsweise als einziger Modellparameter nur die Fahrzeuglängsbeschleunigung herangezogen werden. Es ist jedoch vorteilhaft zusätzliche Parameter wie beispielsweise die Fahrzeugquerbeschleunigung oder die Insassenmasse, welche mittels einer Insassenerkennungsvorrichtung, einer Schätzmethode, einer Gewichtserfassungsmatte oder anderen Gewichtssensoren erfasst wird hinzuzunehmen.

In einer Ausgestaltungen dieser Weiterbildung werden als Modellparameter für das Gurtkraftmodell mindestens die Fahrzeuggeschwindigkeit und ergänzend eine auf einen Bremseingriff hindeutende Bremssystemgröße und/oder ein Signal eines Bremsassistenzsystems herangezogen.

In einer anderen Ausgestaltung der Weiterbildung wird als Modellparameter ein Signal eines Fahrdynamikregelsystems und/oder die Gierrate und/oder der Lenkwinkel herangezogen.

In einer Ausgestaltung des erfindungsgemäßen Verfahrens sind zur Ermittlung der indikativen Größe für die Gurtkraft eine oder mehrere Kraft- oder Dehnungsmessvorrichtungen im oder am Gurtband oder einem anderen Teil des Gurtsystems angeordnet. In erster Näherung kann die Gurtkraft als proportional zu der Zugkraft im Gurt betrachtet werden, so dass eine erfasste Zugkraft im Gurt oder an einer Gurtaufhängung als indikative Größe für die Gurtkraft besonders gut geeignet ist.

In einer anderen Ausgestaltung des erfindungsgemäßen Verfahrens wird als indikative Größe für die Gurtkraft der Motorstrom während einer vorgebbaren Ansteuerphase des Gurtstrafferantriebs herangezogen.

In einer weiteren Ausgestaltung ist die vorgebbare Ansteuerphase eine Motorstromtestphase und in dieser Motorstromtestphase erfolgt eine vorgebbare ein- oder mehrmalige Ansteuerung des Gurtsrafferantriebs zur Ermittlung des Motorstroms derart, dass sich die Gurtspule nur soweit dreht, dass sich die Blockiervorrichtung noch nicht lösen kann. Den Motorstrom als indikative Größe für die Gurtkraft heranzuziehen hat den Vorteil, dass keine zusätzliche Messvorrichtung nötig ist und trotzdem eine direkt mit der Gurtkraft korrelierte Größe betrachtet wird. Der Motorstrom ist erster Näherung proportional zur Kraft des Gurtstraffermotors, welcher, bei Vernachlässigung von Reibungsverlusten gleich der Zugkraft im Gurtband ist, falls das Gurtband nicht von der Blockiervorrichtung oder einer anderen Vorrichtung gehalten wird. Eine genauere Zuordnung zwischen Motorstrom und Gurtkraft kann über eine Kennlinie erfolgen, welche auch die Reibungskräfte an der Gurtumlenkvorrichtung und weiteren Bauteilen berücksichtigen kann.

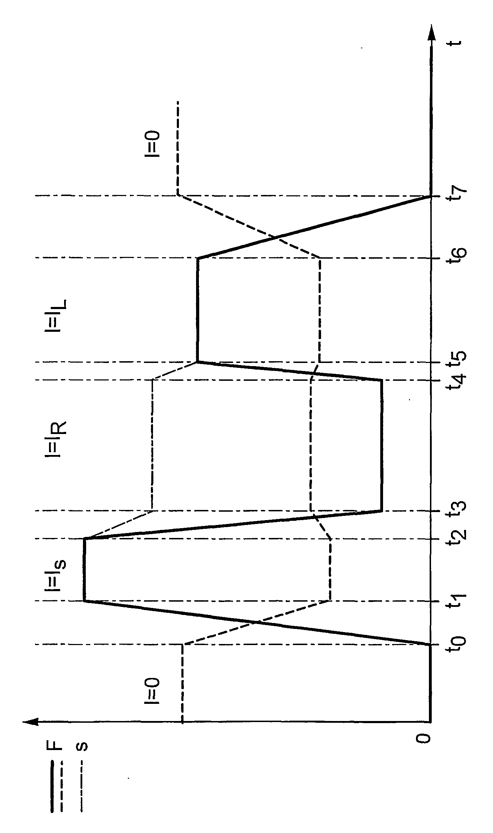

Nachfolgend wird eine vorteilhafte Ausführungsform des erfindungsgemäßen Verfahrens anhand der Zeichnung näher beschrieben. Die einzige Figur zeigt die Verläufe der Gurtstrafferantriebskraft F (durchgezogen/gestrichelt) und des Gurtwegs s (gepunktet) gegenüber der Zeit t bei der Durchführung des erfindungsgemäßen Verfahrens. Die Verläufe sind lediglich qualitativ dargestellt und die Verhältnisse der einzelnen Zeitintervalle zwischen jeweils zwei Zeitpunkten tₙ und tₙ₊₁ können von den Zeitverhältnissen bei einem tatsächlichen Verfahrensablauf stark abweichen.

In der Figur kennzeichnet der Zeitpunkte t₀ den Beginn und der Zeitpunkt t₇ das Ende des Verfahrens zur Ansteuerung eines reversiblen Gurtstraffers.

Bei dem zur Figurenbeschreibung herangezogenen reversiblen Gurtstraffer handelt es sich beispielhaft um einen elektromotorisch angetriebenen Gurtstraffer. Alternativ kann aber auch ein pneumatisch oder hydraulisch angetriebener Gurtstraffer verwendet werden. Bei einem elektromotorischen Gurtstraffer ist eine direkt steuerbare Größe der Motorstrom, welcher durch den Antriebsmotor fließt. Dieser ist eng mit der Gurtstrafferantriebskraft F verknüpft, welche der Gurtstrafferantrieb auf den Gurt ausübt. Eine Erhöhung des Motorstroms bewirkt regelmäßig auch eine Erhöhung der Gurtstrafferantriebskraft F. Es wird deshalb im Folgenden, beispielhaft für eine Regelgröße eines Gurtstrafferantriebs wiederholt auf den Motorstrom I Bezug genommen.

Die eigentliche Gurtstraffung, welche vorzugsweise zum Schutz eines Insassen ausgelöst wird und den Beginn des ganzen Gurtstraffverfahrens darstellt, beginnt im Zeitpunkt t₀. Bis zu diesem Zeitpunkt t₀ befindet sich das Fahrzeug in einem Regelbetriebszustand und der Gurtstraffer befindet sich demzufolge im Grundzustand, das heißt er ist inaktiv. Dementsprechend ist der Motorstrom, welcher im Grundzustand durch den Gurtstrafferantriebsmotor fließt I = 0. Zu dem Zeitpunkt t₀ wird nun beispielsweise ein Steuersignal eines Bremsassistenzsystems erfasst, welches bewirkt, dass der reversible Gurtstraffer zum Schutz eines Insassen ausgelöst wird. Der Gurtstrafferantriebsmotor strafft den Gurt mit vorgebbarer hoher Straffstärke, das heißt der Motorstrom beträgt I = I_{S}, wobei abhängig von der Ausführung des Gurtstraffers der Motorstrom bzw. die Gurtstrafferantriebskraft an eine Gefahrensituation und/oder an ermittelte Insassenparameter angepasst werden können. Die Gurtkraft steigt bis auf einen Straffwert und die von der Gurtspule abgewickelte Gurtlänge sinkt auf einen Minimalwert.

Das Ende der eigentlichen Gurtstraffung, welche dem Insassenschutz dient, ist durch ein vorgebbares Zeitintervall t₂ - t₀ festgelegt und ergänzend oder alternativ an eine vorgebbare Bedingung, beispielsweise einen Schwellwert für die Fahrzeugbeschleunigung oder die Gurtkraft geknüpft. In diesem Straffintervall steigt der Motorstrom bis zum Zeitpunkt t₁ um für eine kurze Zeitdauer t₂ - t₁ auf dem vorgebbaren Straffwert I_{S} zu bleiben. Die Zeitdauer t₂ - t₁ kann auch 0 s betragen, so dass an die Anstiegsphase des Motorstroms sogleich die Phase zwischen den Zeitpunkten t₂ und t₃ anschließt, in welcher der Motorstrom auf eim Rückhalteniveau I = I_{R} abgesenkt wird. Dieses Rückhalteniveau des Motorstroms kann relativ hoch sein, ist aber üblicherweise kleiner als I_{S} (gestrichelter Verlauf zwischen t₃ und t₄), wobei ein Gurtauszug durch die Haltekraft des Antriebsmotors des Gurtstraffers weitgehend verhindert wird. Vorzugsweise wird das Rückhalteniveau des Motorstroms relativ gering (durchgezogener Verlauf zwischen t₃ und t₄) oder gleich Null sein. Die gesamte oder ein Teil der Rückhaltekraft wird dann durch die Reibungskräfte erzeugt, welche beispielsweise an der Gurtumlenkrolle auftreten. Der Motorstrom kann zusätzlich beispielsweise bei einer Fahrzeugbeschleunigung über 5 m/s² bis auf I = I_{R} = 0 abgesenkt werden. Ein unerwünschter Gurtauszug zwischen den Zeitpunkten t₃ und t₄ wird in diesem Fall (I_{R} = 0) durch die Blockiervorrichtung fast vollständig verhindert, mit Ausnahme eines geringfügigen Abwickelns des Gurtbandes bis die Gurtspule eine Position erreicht, in welcher die Blockiervorrichtung greift und den weiteren Gurtauszug verhindert.

Mittels Parametern wie der Fahrzeuggeschwindigkeit, der Bremspedalbetätigung oder der Lenkradbetätigung wird auf das Ende einer Gefahrensituation und/oder auf einen Normalbetriebszustand des Fahrzeugs geschlossen. Dies ist beispielsweise dann der Fall, wenn nach einer Vollbremsung das Bremspedal gelöst wird oder das Fahrzeug zum Stillstand kommt.

Nachdem zwischen den Zeitpunkten t₃ und t₄ auf einen Normalbetriebszustand des Fahrzeugs geschlossen wird und gegebenenfalls weitere vorgegebene Bedingungen erfüllt sind, wird eine für die Gurtkraft indikative Größe zur Einleitung des Öffnungsmodus herangezogen. Beispielsweise hat zum Zeitpunkt t₄ die Fahrzeuglängsbeschleunigung um einen vorgebbaren Wert abgenommen und deutet somit als die für die Gurtkraft indikative Größe darauf hin, dass die Gurtkraft um mindestens einen vorgebbaren Wert abgenommen hat. Eine andere für die Gurtkraft indikative Größe, mit welcher der Zeitpunkt t₄ vorteilhaft bestimmt werden kann, ist ein Signal für die Bremsaktivität oder ein Signal für die Bremsstärke, da durch ein Zurückschwingen des Insassen in Richtung Sitzlehne im Anschluss an einen Bremsvorgang die Gurtkraft teilweise stark vermindert wird.

Zum Zeitpunkt t₄ wird der Antrieb des Gurtstraffers im Öffnungsmodus angesteuert, wobei der Motorstrom im Öffnungsmodus so geregelt wird, dass zwischen den Zeitpunkten t₄ und t₅ die Gurtspule so weit in Aufwickelrichtung gedreht wird, bis deren Position ein Öffnen der Blockiervorrichtung ermöglicht, wobei bei dieser Drehung das Gurtband ein kleines Stück aufgewickelt wird. Hierzu dürfen bei einer üblichen Blockiervorrichtung, welche aus Sperrklinke und einer komplementären Verzahnung auf der Gurtspule besteht, die hinterschnittenen Zähne von Sperrklinke und Verzahnung nicht mehr überlappen. Der Mindestdrehwinkel ist bei einer solchen Blockiervorrichtung durch den Winkel der Hinterschneidung gegeben. Zum Zeitpunkt t₅ hat sich die Gurtspule um den erforderlichen Drehwinkel gedreht, welcher mittels eines Drehwinkelgebers erfasst oder mittels einer Auswertung des Motorstroms ermittelt werden kann. Der Aufwickelvorgang erfolgt vorzugsweise derart, dass die Gurtkraft beim Aufwickeln des Gurtbandes im Öffnungsmodus nicht oder zumindest nur sehr gering ansteigt. Um eine solche Ansteuerung zu ermöglichen, werden die für die Gurtkraft indikative Größe und der Motorstrom des Gurtstraffermotors herangezogen. In einer einfachen alternativen Ausführung wird das Gurtband mit vorgebbarem moderatem Motorstrom aufgewickelt, ohne die Gurtkraft im Aufwickelvorgang weiter zu berücksichtigen.

Nach dem Zeitpunkt t₅ wird der Motorstrom des Antriebsmotors des Gurtstraffers für eine vorgebbare Lösezeit T_{L} = t₆ - t₅ auf eine Lösestromstärke I = I_{L} geregelt und anschließend in den Grundzustand I = 0 zurückgeregelt. Die Lösezeit T_{L} kann auch gleich Null sein.

Zum Zeitpunkt t₆ ist sichergestellt, dass alle Bedingungen zum Öffnen der Blockiervorrichtung erfüllt sind, der Motorstrom wird zwischen den Zeitpunkten t₆ und t₇ auf I = 0 heruntergeregelt und das Gurtband wird in dieser Abwickelphase zum Abwickeln freigeben. Zum Zeitpunkt t₇ befindet sich der reversible Gurtstraffer wieder im Grundzustand.

Durch das Ansteuern des Gurtstraffers zum Zeitpunkt t₄ wird erreicht, dass die auf den Insassen wirkende Gurtkraft beim Aufwickeln des Gurtbandes während des Lösevorgangs nur einen relativ geringen Wert annimmt und/oder nicht wesentlich ansteigt, um die Blockiervorrichtung durch Drehen der Gurtspule zu öffnen.

## Patentansprüche

1. Verfahren zur Ansteuerung eines reversiblen Gurtstraffers zum Straffen eines sich von einer Gurtspule abwickelnden Gurtbandes eines Sicherheitsgurts in einem Kraftfahrzeug wobei
- der Gurtstraffer einen auf die Gurtspule wirkenden Antrieb aufweist und
- der Sicherheitsgurt als Gurtauszugssperre eine auf die Gurtspule in Abwickelrichtung wirkende Blockiervorrichtung aufweist, deren Blockierung nur gelöst werden kann, wenn die Gurtspule um einen bestimmten Drehwinkel in Aufwickelrichtung gedreht wird,
**dadurch gekennzeichnet, dass**
- nach einem durch eine Gefahrensituation bedingten Auslösen des Gurtstraffers, und
- wenn eine für die Gurtkraft indikative Größe auf ein Abnehmen der Gurtkraft hindeutet
ein Öffnungsmodus eingeleitet wird, in welchem der Gurtstrafferantrieb zum Öffnen der Blockiervorrichtung in der Weise angesteuert wird, dass zu Beginn des Öffnungsmodus die Gurtspule um den bestimmten Drehwinkel in Aufwickelrichtung dreht.

2. Verfahren zur Ansteuerung eines reversiblen Gurtstraffers zum Straffen eines sich von einer Gurtspule abwickelnden Gurtbandes eines Sicherheitsgurts in einem Kraftfahrzeug wobei
- der Gurtstraffer einen auf die Gurtspule wirkenden Antrieb aufweist und
- der Sicherheitsgurt als Gurtauszugssperre eine auf die Gurtspule in Abwickelrichtung wirkende Blockiervorrichtung aufweist, deren Blockierung nur gelöst werden kann, wenn die Gurtspule um einen bestimmten Drehwinkel in Aufwickelrichtung gedreht wird,
**dadurch gekennzeichnet, dass**
- nach einem durch eine Gefahrensituation bedingten Auslösen des Gurtstraffers, und
- wenn eine für die Gurtkraft indikative Größe darauf hindeutet, dass die Gurtkraft eine vorgebbare Schwelle unterschreitet
ein Öffnungsmodus eingeleitet wird, in welchem der Gurtstrafferantrieb zum Öffnen der Blockiervorrichtung in der Weise angesteuert wird, dass zu Beginn des Öffnungsmodus die Gurtspule um den bestimmten Drehwinkel in Aufwickelrichtung dreht.

3. Verfahren nach einem der Ansprüche 1 oder 2,
**dadurch gekennzeichnet, dass**
der Öffnungsmodus erst dann eingeleitet wird, wenn ein vorgegebener Fahrzeugbetriebszustand vorliegt, welcher indikativ für eine Beendigung der Gefahrensituation ist.

4. Verfahren nach Anspruch 3,
**dadurch gekennzeichnet, dass**
in einem Fahrzeug mit einem Bremsassistenzsystem, bei dem ein Bremsassistenzsystemsignal ein Auslösen eines Bremseingriffs mit vorgegebener starker Bremswirkung bewirkt, der Wegfall dieses Bremsassistenzsignals sowohl für die Beendigung der Gefahrensituation indikativ ist, als auch auf das Abnehmen der Gurtkraft oder das Unterschreiten eines Schwellwerts durch die Girtkraft hindeutet, und den Öffnungsmodus einleitet.

5. Verfahren nach einem der Ansprüche 3 oder 4,
**dadurch gekennzeichnet, dass**
bei einem Bremsvorgang das Erreichen oder Unterschreiten eines ersten Geschwindigkeitsschwellwerts durch die Fahrzeuggeschwindigkeit indikativ für die Beendigung der Gefahrensituation ist, und das Erreichen oder Unterschreiten eines zweiten Geschwindigkeitsschwellwerts durch die Fahrgeschwindigkeit als indikative Größe für die Gurtkraft auf das Abnehmen der Gurtkraft hindeutet.

6. Verfahren nach Anspruch 5,
**dadurch gekennzeichnet, dass**
der erste und auch der zweite Fahrgeschwindigkeitsschwellwert gleich Null sind.

7. Verfahren nach Anspruch 3,
**dadurch gekennzeichnet, dass**
die indikative Größe für die Gurtkraft eine Gurtkrafterwartungsgröße ist, welche mittels eines fahrdynamische Parameter heranziehenden Gurtkraftmodells ermittelt wird, und auf ein Abnehmen der Gurtkraft geschlossen wird, wenn die Gurtkrafterwartungsgröße um mindestens einen vorgebbaren Abnahmeschwellwert abnimmt.

8. Verfahren nach Anspruch 7,
**dadurch gekennzeichnet, dass**
als Modellparameter für das Gurtkraftmodell mindestens die Fahrzeuggeschwindigkeit und ergänzend eine auf einen Bremseingriff hindeutende Bremssystemgröße und/oder ein Signal eines Bremsassistenzsystems herangezogen werden.

9. Verfahren nach Anspruch 7,
**dadurch gekennzeichnet, dass**
als Modellparameter ein Signal eines Fahrdynamikregelsystems und/oder die Gierrate und/oder der Lenkwinkel herangezogen werden.

10. Verfahren nach einem der Ansprüche 1 bis 3,
**dadurch gekennzeichnet, dass**
als indikative Größe für die Gurtkraft der Motorstrom während einer vorgebbaren Ansteuerphase des Gurtstrafferantriebs herangezogen wird.

11. Verfahren nach Anspruch 10,
**dadurch gekennzeichnet, dass**
die vorgebbare Ansteuerphase eine Motorstromtestphase ist und in dieser Motorstromtestphase eine vorgebbare ein- oder mehrmalige Ansteuerung des Gurtsrafferantriebs zur Ermittlung des Motorstroms derart erfolgt, dass sich die Gurtspule nur soweit dreht, dass sich die Blockiervorrichtung noch nicht lösen kann.

12. Verfahren nach einem der Ansprüche 1 bis 3,
**dadurch gekennzeichnet, dass**
zur Ermittlung der indikativen Größe für die Gurtkraft eine oder mehrere Kraft- oder Dehnungsmessvorrichtungen im oder am Gurtband oder einem anderen Teil des Gurtsystems angeordnet sind.

## Claims

1. Method for actuating a reversible belt pretensioner for pretensioning a belt webbing, unwound from a belt reel, of a seat belt in a motor vehicle,
- the belt pretensioner having a drive which acts on the belt reel, and
- the seat belt having, as a belt extraction lock, a locking device which acts on the belt reel in the unwinding direction and whose locking can be released only if the belt reel is rotated about a certain angle of rotation in the winding-on direction,
**characterized in that**
- after a triggering of the belt pretensioner caused by a hazardous situation, and
- when a variable indicative of the belt force indicates a decrease in the belt force
an opening mode is initiated in which the belt pretensioner drive is actuated in order to open the locking device in such a manner that, at the beginning of the opening mode, the belt reel rotates through the specific angle of rotation in the winding-on direction.

2. Method for actuating a reversible belt pretensioner for pretensioning a belt webbing, unwound from a belt reel, of a seat belt in a motor vehicle,
- the belt pretensioner having a drive which acts on the belt reel, and
- the seat belt having, as a belt extraction lock, a locking device which acts on the belt reel in the unwinding direction and whose locking can be released only if the belt reel is rotated about a certain angle of rotation in the winding-on direction,
**characterized in that**
- after a triggering of the belt pretensioner caused by a hazardous situation, and
- when a variable indicative of the belt force indicates the fact that the belt force falls short of a predefinable threshold
an opening mode is initiated in which the belt pretensioner drive is actuated in order to open the locking device in such a manner that, at the beginning of the opening mode, the belt reel rotates through the specific angle of rotation in the winding-on direction.

3. Method according to either of Claims 1 and 2, **characterized in that** the opening mode is initiated only if a predefined vehicle operating state is present which is indicative of an end of the hazardous situation.

4. Method according to Claim 3, **characterized in that** in a vehicle with a brake booster system, in which a brake booster system signal brings about a triggering of a braking action with a predefined, strong braking effect, the omission of this brake assistance signal is indicative both of the end of the hazardous situation and also of the decrease in the belt force or the fact that the belt force falls short of a threshold value, and initiates the opening mode.

5. Method according to either of Claims 3 and 4, **characterized in that**, in a braking operation, the fact that the vehicle speed reaches or falls short of a first speed threshold value is indicative of the end of the hazardous situation, and the fact that the travelling speed, as a variable indicative of the belt force, reaches or falls short of a second speed threshold value indicates the decrease in the belt force.

6. Method according to Claim 5, **characterized in that** the first and also the second travelling speed threshold values are equal to zero.

7. Method according to Claim 3, **characterized in that** the indicative variable of the belt force is a belt-force expected variable which is determined by means of a belt-force model using vehicle-movement-dynamics parameters, and a decrease in the belt force is concluded if the belt-force expected variable decreases by at least one predefinable decrease threshold value.

8. Method according to Claim 7, **characterized in that** at least the vehicle speed and, in addition, a brake-system variable indicating a braking action and/or a signal of a brake booster system are used as model parameters for the belt-force model.

9. Method according to Claim 7, **characterized in that** a signal of a vehicle-movement-dynamics control system and/or the yaw rate and/or the steering angle are used as model parameters.

10. Method according to one of Claims 1 to 3, **characterized in that** the motor current during a predefinable actuation phase of the belt pretensioner drive is used as a variable indicative of the belt force.

11. Method according to Claim 10, **characterized in that** the predefinable actuation phase is a motor-current test phase and in this motor-current test phase a predefinable single or multiple actuation of the belt pretensioner drive in order to determine the motor current is carried out in such a manner that the belt reel only rotates to an extent such that the locking device can not yet be released.

12. Method according to one of Claims 1 to 3, **characterized in that**, in order to determine the variable indicative of the belt force, one or more force- or strain-measuring devices are arranged in or on the belt webbing or another part of the belt system.

## Revendications

1. Procédé pour l'actionnement d'un tendeur de ceinture réversible pour le raidissement d'une bande de sangle, se déroulant d'une bobine de sangle, d'une ceinture de sécurité dans un véhicule automobile,
- le tendeur de sangle présentant un entraînement agissant sur la bobine de sangle, et
- la ceinture de sécurité présentant comme blocage d'extraction de sangle un dispositif de blocage agissant sur la bobine de sangle dans le sens de déroulement, dont le blocage ne peut être déclenché que si la bobine de sangle est tournée d'un angle de rotation défini dans le sens d'enroulement,
**caractérisé en ce que**
- après un déclenchement, conditionné par une situation à risque, du tendeur de sangle, et
- si une grandeur indicative de la force de sangle indique un enlèvement de cette force,
un mode d'ouverture est enclenché, dans lequel l'entraînement du tendeur de sangle est activé pour l'ouverture du dispositif de blocage en ce sens que, au début du mode d'ouverture, la bobine de sangle tourne de l'angle de rotation défini dans le sens d'enroulement.

2. Procédé pour l'actionnement d'un tendeur de sangle réversible pour le raidissement d'une bande de sangle, se déroulant d'une bobine de sangle, d'une ceinture de sécurité sur un véhicule automobile,
- le tendeur de sangle présentant un entraînement agissant sur la bobine de sangle et
- la ceinture de sécurité présentant comme blocage d'extraction de sangle un dispositif de blocage agissant sur la bobine de sangle dans le sens de déroulement, dont le blocage ne peut être détaché que si la bobine de sangle est tournée d'un angle de rotation défini dans le sens d'enroulement,
**caractérisé en ce que**
- après un déclenchement, conditionné par une situation à risque, du tendeur de sangle, et
- si une grandeur indicative de la force de sangle indique que la force de sangle est inférieure à un seuil prédéfinissable,
un mode d'ouverture est enclenché, dans lequel l'entraînement du tendeur de sangle est actionné pour l'ouverture du dispositif de blocage en ce sens que, au début du mode d'ouverture, la bobine de sangle tourne de l'angle de rotation défini dans le sens d'enroulement.

3. Procédé selon l'une quelconque des revendications 1 ou 2, **caractérisé en ce que** le mode d'ouverture n'est enclenché que dans les cas où l'on a un état d'exploitation du véhicule prédéfini qui indique une fin de la situation à risque.

4. Procédé selon la revendication 3, **caractérisé en ce que**, dans un véhicule équipé d'un système d'assistance de freinage, sur lequel un signal de système d'assistance de freinage entraîne un déclenchement d'une intervention de freinage avec un effet de freinage important prédéfini, la suppression de ce signal d'assistance de freinage est un élément indicateur aussi bien de la fin de la situation à risque que de l'enlèvement de la force de sangle ou du passage au-dessous d'une valeur seuil par la force de sangle, et enclenche le mode d'ouverture.

5. Procédé selon l'une quelconque des revendications 3 ou 4, **caractérisé en ce que**, lors d'une opération de freinage, le fait d'atteindre ou de passer au-dessous d'une certaine valeur seuil de vitesse par la vitesse du véhicule est un élément indicateur de la fin de la situation à risque, et le fait d'atteindre ou de passer au-dessous d'une seconde valeur seuil de vitesse par la vitesse du véhicule comme grandeur indicative de la force de sangle indique l'enlèvement de la force de sangle.

6. Procédé selon la revendication 5, **caractérisé en ce que** la première et également la seconde valeurs seuils de vitesse de roulement sont égales à zéro.

7. Procédé selon la revendication 3, **caractérisé en ce que** la grandeur indicative pour la force de sangle est une grandeur escomptée de force de sangle qui est calculée au moyen d'un modèle de force de sangle faisant appel à des paramètres de dynamique de roulement, et on conclut à un enlèvement de la force de sangle lorsque la grandeur escomptée de la force de sangle diminue d'au moins une valeur seuil de diminution prédéfinissable.

8. Procédé selon la revendication 7, **caractérisé en ce que**, comme paramètre de modèle pour le modèle de la force de sangle, on a recours au moins à la vitesse du véhicule et en complément à une grandeur du système de freinage indiquant une intervention de freinage et/ou un signal d'un système d'assistance de freinage.

9. Procédé selon la revendication 7, **caractérisé en ce que**, comme paramètre de modèle, on a recours à un signal d'un système de réglage de dynamique de roulement et/ou au taux de lacet et/ou à l'angle de braquage.

10. Procédé selon l'une quelconque des revendications 1 à 3, **caractérisé en ce que**, comme grandeur indicative pour la force de sangle, on a recours au courant du moteur pendant une phase d'actionnement prédéfinissable de l'entraînement du tendeur de sangle.

11. Procédé selon la revendication 10, **caractérisé en ce que** la phase d'actionnement prédéfinissable est une phase test du courant du moteur et, lors de cette phase test du courant du moteur, on procède à un actionnement unique ou répété prédéfinissable de l'entraînement du tendeur de sangle pour le calcul du courant du moteur, de sorte que la bobine de sangle tourne seulement de telle manière que le dispositif de blocage ne puisse pas encore se détacher.

12. Procédé selon l'une quelconque des revendications 1 à 3, **caractérisé en ce que**, pour déterminer la grandeur indicative pour la force de sangle, un ou plusieurs dispositifs de mesure de force ou d'allongement sont disposés dans ou sur la bande de sangle ou une autre partie du système de sangle.
